# EUROPEAN PATENT SPECIFICATION

(11) **EP 2 690 435 B1**
(45) Date of publication and mention of the grant of the patent: **05.10.2022**
(21) Application number: 12760478.3
(22) Date of filing: 21.03.2012
(51) Int. Cl.: G01N 30/60, G01N 30/88

(54) **LIQUID CHROMATOGRAPHY COLUMN, AND METHOD FOR ANALYZING HEMOGLOBIN**
SÄULE FÜR FLÜSSIGCHROMATOGRAPHIE UND VERFAHREN ZUR ANALYSE VON HÄMOGLOBIN
COLONNE POUR CHROMATOGRAPHIE EN PHASE LIQUIDE, ET PROCÉDÉ D'ANALYSE D'HÉMOGLOBINES

(30) Priority: 22.03.2011 JP 2011062936
(43) Date of publication of application: 29.01.2014
(73) Proprietor: Sekisui Medical Co., Ltd., Tokyo 103-0027 (JP)
(72) Inventor: YOTANI Takuya, Ryugasaki-shi Ibaraki 301-0852 (JP)
(74) Representative: Cabinet Beau de Loménie
(86) International application number: PCT/JP2012/057135
(87) International publication number: WO 2012/128276

(56) References cited:
- EP-A1- 0 655 624
- EP-A1- 1 103 812
- EP-A1- 1 146 333
- CA-A- 783 337
- GB-A- 883 766
- JP-A- 2000 131 301
- JP-A- 2004 222 831
- JP-A- 2010 260 052
- US-A- 4 250 035
- IP C Y ET AL: "Separation of asymmetrical hybrid containing hemoglobin F by anaerobic anion-exchange high-performance liquid chromatography", ANALYTICAL BIOCHEMISTRY, ACADEMIC PRESS INC, NEW YORK, vol. 156, no. 2, 1 August 1986 (1986-08-01), pages 348-353, XP024825650, ISSN: 0003-2697, DOI: 10.1016/0003-2697(86)90264-2 [retrieved on 1986-08-01]
- JEAN KARLO ACOSTA MENDONCA ET AL: "POLYETHYLENE POWDER MICROCOLUMN FOR PROTEIN SEPARATION PRIOR TO HPLC PLASMA ANALYSIS. APPLICATION TO THE DETERMINATION OF COPPER AND ZINC", JOURNAL OF SEPARATION SCIENCE, WILEY, DE, vol. 26, no. 9/10, 1 July 2003 (2003-07-01), pages 829-834, XP001175900, ISSN: 1615-9306, DOI: 10.1002/JSSC.200301266
- Anonymous: "Poly(methyl methacrylate) - Wikipedia", , 19 March 2011 (2011-03-19), XP055928781, Retrieved from the Internet: URL:https://en.wikipedia.org/w/index.php?t itle=Poly(methyl_methacrylate)&oldid=41961 8238#Other_uses [retrieved on 2022-06-08]

## Description

### TECHNICAL FIELD

The present invention relates to a column for liquid chromatography. The present invention also relates to a method for analyzing hemoglobin using the column for liquid chromatography.

### BACKGROUND ART

In the fields of organic chemistry, biochemistry, medicine, and the like, liquid chromatography has been widely used for measurement and analysis of analyte components. In the field of medicine, for example, liquid chromatography has been employed for measurement of hemoglobin A1c, which is an indicator for diabetic diagnosis. Hemoglobin A1c is glycated hemoglobin that has blood sugar chemically bound to an N-terminal of a β-globin chain of hemoglobin. A proportion of hemoglobin A1c in the hemoglobin, i.e., a ratio of glycated hemoglobin to the total of glycated hemoglobin and non-glycated hemoglobin, is considered to reflect an average blood glucose level in a period of one to two months. Unlike blood glucose level, a hemoglobin A1c value (%) representing the proportion of hemoglobin A1c in the total hemoglobin does not exhibit temporal fluctuations and thus has been widely used as an indicator for diabetic diagnosis.

Conventionally, stainless steel columns having excellent pressure resistance have been mainly used as columns for high-performance liquid chromatography.

However, the use of a stainless steel column to measure samples such as proteins, nucleic acids, and sugars derived from living organisms may cause components derived from living organisms to be non-specifically adsorbed to the inner surface of the column, adversely affecting the analysis. In particular, non-specific adsorption to the inner surface of the column during analysis of hemoglobin A1c poses a serious problem because it makes accurate measurement impossible. Therefore, the column must be coated with silicone resin or the like, as disclosed in Patent Literature 1.

Patent Literature 2 discloses a column produced using engineering plastics having excellent strength (pressure resistance) as typified by polyetheretherketone (PEEK) . The use of such a column can suppress non-specific adsorption of components derived from living organisms.

However, engineering plastics as typified by PEEK are disadvantageously expensive.

"Separation of asymmetrical hybrid containing hemoglobin F by anaerobic anion-exchange high-performance liquid chromatography" (IP C Y ET AL, ANALYTICAL BIOCHEMISTRY, vol. 156, no. 2, 1 August 1986, pages 348-353) and EP 1 146 333 A1 (SEKISUI CHEMICAL CO LTD, 17-10-2001) both disclose columns for liquid chromatography comprising a column pipe and an end fitting, wherein the column pipe and the end fitting comprise polyethylene.

Therefore, it is desired to provide a column that can be produced at low cost and allows suppression of non-specific adsorption of components derived from living organisms.

### CITATION LIST

### - Patent Literature

Patent Literature 1: JP-A 2000-131302
Patent Literature 2: JP-A H06(1994)-229999

### SUMMARY OF INVENTION

### - Technical Problem

An object of the present invention is to provide a column for liquid chromatography that can be produced at low cost and allows suppression of non-specific adsorption of components derived from living organisms. Another object of the present invention is to provide a method for analyzing hemoglobin using the column for liquid chromatography. The present invention is defined in the claims.

### - Solution to Problem

The present invention relates to a column for liquid chromatography including a column pipe and an end fitting, wherein the column pipe and the end fitting comprise polymethylmethacrylate.

The present invention is described in detail below.

In order to suppress non-specific adsorption of components derived from living organisms to the inner surface of a column and to ensure accurate measurement, the use of highly hydrophobic materials (specifically, materials with a water contact angle of 90° or more) for the column may be considered. However, when the column is actually produced from highly hydrophobic materials and samples such as hemoglobin are measured, there is a case where separation performance is reduced, depending on the type of materials. At the same time, some columns formed using relatively low hydrophobic materials can successfully detect target objects when these columns are used for measuring samples such as hemoglobin. Therefore, the degree of hydrophobicity of materials for columns is not considered to have an inevitable effect on separation performance of hemoglobin and the like.

Accordingly, as a result of intensive studies on various materials regardless of the degree of hydrophobicity, the present inventors found that the use of polymethylmethacrylate as material of a column pipe and an end fitting enables low-cost production of a column for liquid chromatography that allows suppression of non-specific adsorption of components derived from living organisms and ensures accurate measurement. The present invention is accomplished based on the above finding.

In embodiments which are not part of the present invention and which are included for comparative purposes, the column pipe and the end fitting of the column disclosed hereunder may comprise polyethylene.

The column for liquid chromatography of the present invention (hereinafter also referred to as the "column of the present invention") includes a column pipe and an end fitting each formed from polymethylmethacrylate. Non-specific adsorption of components derived from living organisms can be suppressed and an accurate measurement can be achieved when relatively low hydrophobic polymethylmethacrylate is used. Further, because polymethylmethacrylate is a commodity resin, the column of the present invention can be produced at low cost and can be incinerated, making it easily disposable.

The effect of the use of the column formed from polymethylmethacrylate to suppress non-specific adsorption of components derived from living organisms is remarkably exhibited particularly in hemoglobin measurement. In other words, when hemoglobin is measured using the column for liquid chromatography of the present invention under specific pressure conditions, hemoglobin can be analyzed with high separation performance, without problems such as damage to the column and leakage from the column.

The column of the present invention can be produced by, for example, injection molding, extrusion molding, cutting, or the like.

Further, the shapes of the column pipe and the end fitting are not particularly limited. The column pipe and the end fitting are connected to each other by a ferrule or a screw, for example.

After the column of the present invention is packed with filler particles, an eluent and a sample are introduced into the column under specific conditions, and the sample is thereby measured. In particular, in the case of hemoglobin measurement, the use of a column having a column pipe and an end fitting formed from polypropylene, polyethylene terephthalate, polycarbonate, or the like tends to cause non-specific adsorption to the inner surface of the column; however, the use of the column of the present invention allows suppression of non-specific adsorption to the inner surface of the column, and thus hemoglobin can be analyzed with high separation performance.

It is another aspect of the present invention to provide a method for analyzing hemoglobin using the column of the present invention.

A liquid chromatograph used for the method for analyzing hemoglobin of the present invention has a structure in which the column of the present invention packed with filler particles is connected to a known liquid chromatograph equipped with a pump for delivering an eluent, a detector, and the like.

In the method for analyzing hemoglobin of the present invention, the flow pressure of the column during analysis is determined by the particle size and particle size distribution of filler particles, column inside diameter, column length, eluent flow rate, and the like. Because the flow pressure varies depending on the conditions, it may be suitably adjusted within a range that results in desired separation performance. To allow analysis of hemoglobin with high separation performance without causing problems such as damage to the column and leakage from the column, the flow pressure of the column during analysis is preferably 4.0 MPa or less, and more preferably 3.0 MPa or less.

The flow pressure of the column is measured by reading a pressure value from a pressure gauge connected between the delivery pump and the column.

The average particle size of filler particles, inside diameter of the column, column length, and eluent flow rate, which also significantly affect separation performance, are preferably adjusted within the following range.

The average particle size of filler particles preferably has a lower limit of 2 µm and an upper limit of 20 µm. In the case where the average particle size of filler particles is less than 2 µm, it increases the flow pressure of the column and thus may cause problems such as damage to the column and leakage from the column. Filler particles with an average particle size of more than 20 µm result in a decrease in separation performance. When such filler particles are used in measurement of hemoglobin A1c, separation of hemoglobin may be insufficient. A more preferred lower limit of the average particle size of filler particles is 5 µm, and a more preferred upper limit thereof is 15 µm.

The average particle size of filler particles is a value measured using a particle size distribution measuring device (available from Particle Sizing Systems; Accusizer 780).

The inside diameter of the column of the present invention preferably has a lower limit of 2.0 mm and an upper limit of 6.0 mm. With a column having an inside diameter of less than 2.0 mm, the linear velocity of the mobile phase flowing through the column is too high, and the flow pressure of the column is thus too high, which may cause problems such as damage to the column and leakage from the column. With a column having an inside diameter of more than 6.0 mm, the analyte and mobile phase in the column are too dispersed, which may result in a decrease in separation performance. A more preferred lower limit of the inside diameter of the column is 3.0 mm, and a more preferred upper limit thereof is 5.0 mm.

The length of the column of the present invention preferably has a lower limit of 10 mm and an upper limit of 50 mm. A column with a length of less than 10 mm may result in a decrease in separation performance along with a decrease in the number of theoretical plates . A column with a length of more than 50 mm results in an increase in the flow pressure of the column, which may cause problems such as damage to the column and leakage from the column. A more preferred lower limit of the column length is 15 mm, and a more preferred upper limit thereof is 40 mm.

The eluent flow rate of the delivery pump preferably has a lower limit of 0.5 mL/min and an upper limit of 2.5 mL/min. An eluent flow rate of less than 0.5 mL/min results in a long measurement time due to a slow flow rate. An eluent flow rate of more than 2.5 mL/min results in an increase in the flow pressure of the column, which may cause problems such as damage to the column and leakage from the column. A more preferred lower limit of the eluent flow rate is 1.0 mL/min, and a more preferred upper limit thereof is 2.0 mL/min.

Filler particles to be packed into the column of the present invention are those used in the conventionally well-known ion-exchange liquid chromatography. Filler particles including ion exchange groups and having the outermost surface hydrophilically treated with ozone water, such as those disclosed in JP Patent No. 3990713, are particularly suitable. The use of such filler particles allows measurement of samples such as hemoglobin with high separation performance even when the flow pressure of the column is low.

The column of the present invention preferably includes filters, each disposed upstream and downstream of the column for preventing leakage of filler particles in the column from a tubular container. The filter is not for trapping contaminants, and it is sufficient if the filter can prevent leakage of filler particles from a tubular container.

A filter formed of paper, resin, metal, or the like may be used, for example. A stainless steel filter having three layers with different pore sizes, such as the one disclosed in JP-A 2006-189427, is particularly suitable.

The filtration surface of the filter may be formed in a circular shape or another shape.

In the case where the same column is repeatedly used for measurement, the column preferably includes a pre-filter disposed upstream of the column for trapping contaminants. The pre-filter may be arranged separately from the column of the present invention, or integrally arranged with the column in a single tubular container. In either case, the pre-filter is connected to a pipe such that the pre-filter is arranged upstream of the column.

In the method for analyzing hemoglobin of the present invention, an eluent used in the liquid chromatography is preferably a buffer containing a known salt compound or an organic solvent. Specific examples include organic acids, inorganic acids, salt thereof, amino acids, and Good's buffers.

Examples of organic acids include citric acid, succinic acid, tartaric acid, and malic acid.

Examples of inorganic acids include hydrochloric acid, nitric acid, sulfuric acid, phosphoric acid, boric acid, and acetic acid.

Examples of amino acids include glycine, taurine, and arginine.

Further, the buffer may contain other common additives. For example, surfactants, various polymers, hydrophilic low-molecular compounds, chaotropic ions, and the like may be suitably added to the buffer.

In hemoglobin measurement, the salt concentration of the buffer preferably has a lower limit of 10 mmol/L and an upper limit of 1000 mmol/L. No ion-exchange reaction occurs when the buffer has a salt concentration of less than 10 mmol/L, and hemoglobin thus cannot be separated in some cases. A buffer having a salt concentration of more than 1000 mmol/L may cause salt deposition, adversely affecting the system.

The method for analyzing hemoglobin of the present invention allows measurement of hemoglobin A0, hemoglobin A1c, hemoglobin F (fetal hemoglobin), hemoglobin A2, and the like. Abnormal hemoglobin variants such as hemoglobin S, hemoglobin C, hemoglobin D, and hemoglobin E can also be measured.

### - Advantageous Effects of Invention

The present invention provides a column for liquid chromatography that can be produced at low cost and allows suppression of non-specific adsorption of components derived from living organisms. When a stainless steel column is used, surface treatment such as silicone resin coating must be applied to the column. However, the column of the present invention does not require such surface treatment. Additionally, because polyethylene and polymethylmethacrylate are commodity resins, they are inexpensive, which provides a significant economic advantage. Further, because the column of the present invention can be incinerated, it can be easily disposed of.

The present invention also provides a method for analyzing hemoglobin using the column for liquid chromatography. The method for analyzing hemoglobin of the present invention allows suppression of non-specific adsorption of components derived from living organisms and ensures accurate measurement.

### BRIEF DESCRIPTION OF DRAWINGS

Fig. 1 is a chromatogram obtained by measuring hemoglobin using a polyethylene column.
Fig. 2 is a chromatogram obtained by measuring hemoglobin using a polymethylmethacrylate column.
Fig. 3 is a chromatogram obtained by measuring hemoglobin using a stainless steel column coated with silicone resin.
Fig. 4 is a chromatogram obtained by measuring hemoglobin using a non-surface-treated stainless steel column.
Fig. 5 is a chromatogram obtained by measuring hemoglobin using a polypropylene column.
Fig. 6 is a chromatogram obtained by measuring hemoglobin using a polyethylene terephthalate column.
Fig. 7 is a chromatogram obtained by measuring hemoglobin using a polycarbonate column.
Fig. 8 is a graph showing a relationship between columns of various materials in examples and comparative examples and half-widths of hemoglobin A1c peaks.
Fig. 9 is a graph showing a relationship between columns of various materials in examples and comparative examples and total peak areas.

### DESCRIPTION OF EMBODIMENTS

The present invention is described in further detail below with reference to examples, but the present invention is not limited to these examples.

### (Examples 1 and 2, and Comparative Examples 1 to 5)

### (Preparation of Empty Column)

Columns having an inside diameter of 4.6 mm and a length of 15 mm were prepared using materials shown in Table 1 for column pipes and end fittings of these columns.

A stainless steel (SUS316) column of Comparative Example 1 was coated with silicone resin using SR2410 (available from Dow Corning Toray Co., Ltd.).

**Table 1**

| | Column materials |
|---|---|
| Example 1 | Polyethylene |
| Example 2 | Polymethylmethacrylate |
| Comparative Example 1 | Stainless steel (SUS316) coated with silicone resin |
| Comparative Example 2 | Stainless steel (SUS316) without surface treatment |
| Comparative Example 3 | Polypropylene |
| Comparative Example 4 | Polyethylene terephthalate |
| Comparative Example 5 | Polycarbonate |

### (Preparation of Filler Particles)

A mixture of 300 g of tetraethylene glycol dimethacrylate (available from Shin-Nakamura Chemical Co., Ltd.), 100 g of triethylene glycol dimethacrylate (available from Shin-Nakamura Chemical Co., Ltd.), and 1.0 g of benzoyl peroxide (available from Kishida Chemical Co., Ltd.) was added to an aqueous solution (2000 mL) of 3% by weight of polyvinyl alcohol (available from The Nippon Synthetic Chemical Industry Co., Ltd.), and the mixture was polymerized under stirring at 80°C for one hour in a reactor in a nitrogen atmosphere.

Next, as a monomer having an ion exchange group, 100 g of 2-methacrylamide-2-methylpropanesulfonate (available from Toagosei Co., Ltd.) and 100 g of polyethylene glycol methacrylate (available from NOF Corporation, ethylene glycol chain n = 4) were dissolved in ion-exchanged water to obtain a mixture. The mixture was further added to the reactor containing the mixture that was polymerized for one hour. The resulting mixture was polymerized under stirring at 80°C for two hours in a nitrogen atmosphere. The resulting polymerization composition was washed with water and acetone. Thus, particles having ion exchange groups were obtained.

Then, 10 g of the obtained particles having ion exchange groups was immersed in 300 mL of ozone water having a dissolved ozone gas concentration of 100 ppm, and stirred for 30 minutes. After stirring, centrifugal separation was performed using a centrifugal separator (available from Hitachi, Ltd., Himac CR20G) to remove supernatant. This process was repeated twice, and thus filler particles were obtained.

The obtained filler particles had an average particle size of 10 µm and a CV value of 14% as measured using a particle size distribution measurement device (available from Particle Sizing Systems; Accusizer 780).

### (Preparation of Column)

The obtained filler particles (0.5 g) were dispersed in 20 mL of 40 mmol/L phosphate buffer (pH 5.3) and stirred to form a slurry. After ultrasonic treatment for five minutes, the entire slurry was poured into a packing device (available from AS ONE Corporation) connected to each empty column (inside diameter of 4.6 mm × length of 15 mm) . A delivery pump (available from GL Sciences; PU-614) was connected to the packing device, and the eluent was delivered at a pressure of 8 MPa to pack the column at constant pressure.

### <Evaluation>

### (Performance Evaluation by Liquid Chromatography)

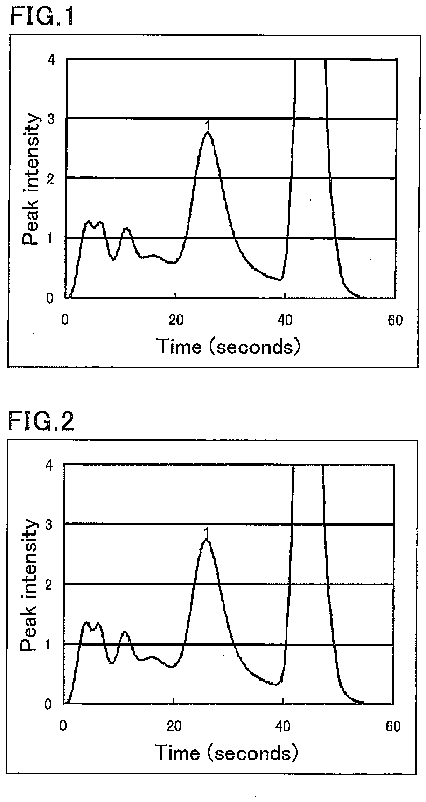

Hemoglobin A1c control analyte (available from Sysmex Corporation) was measured using the above-prepared columns. Table 2 shows measurement conditions. Figs. 1 to 7 show chromatograms obtained from measurements using the columns of various materials.

**Table 2**

| System | | LC-20A system (Shimadzu Corporation) |
|---|---|---|
| Eluent | Eluent A | 40 mmol/L Phosphate buffer (pH5. 3) |
| | Eluent B | 250 mmol/L Phosphate buffer (pH8. 0) |
| Elution conditions | | Step gradient from eluent A 100% to eluent B 100% |
| Flow rate | | 1. 5 mL/min |
| Detection wavelength | | 415 nm |
| Sample amount | | 5 *µ*L |
| Flow pressure of the column | | 0. 8 MPa |

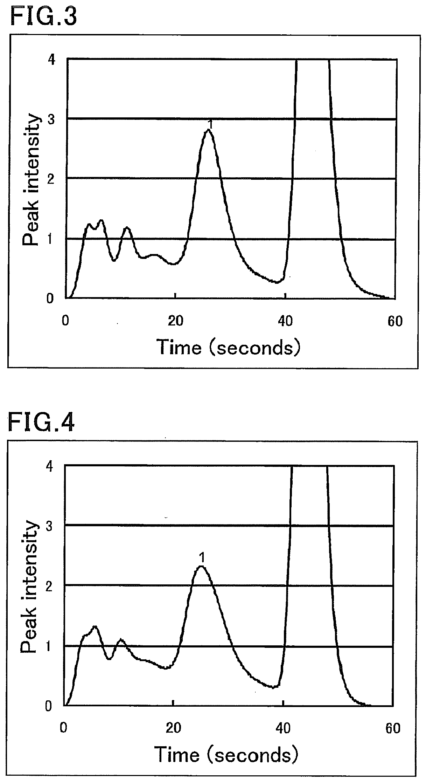

The use of the polyethylene (PE) column (Fig. 1) and the polymethylmethacrylate (PMMA) column (Fig. 2) resulted in separation patterns similar to that obtained with the use of stainless steel column coated with silicone resin (Fig. 3).

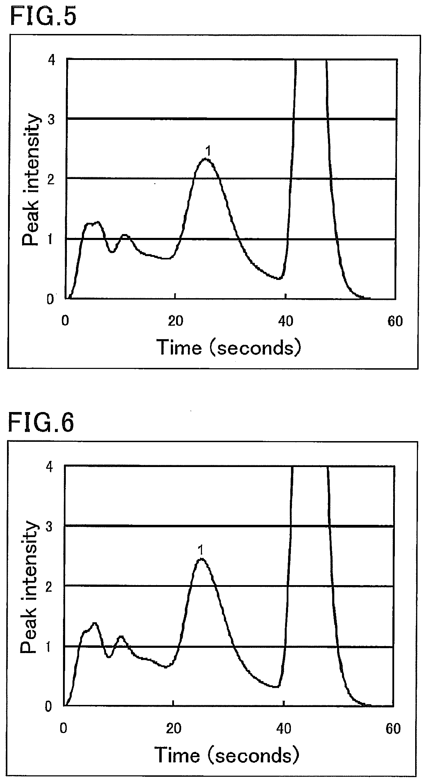

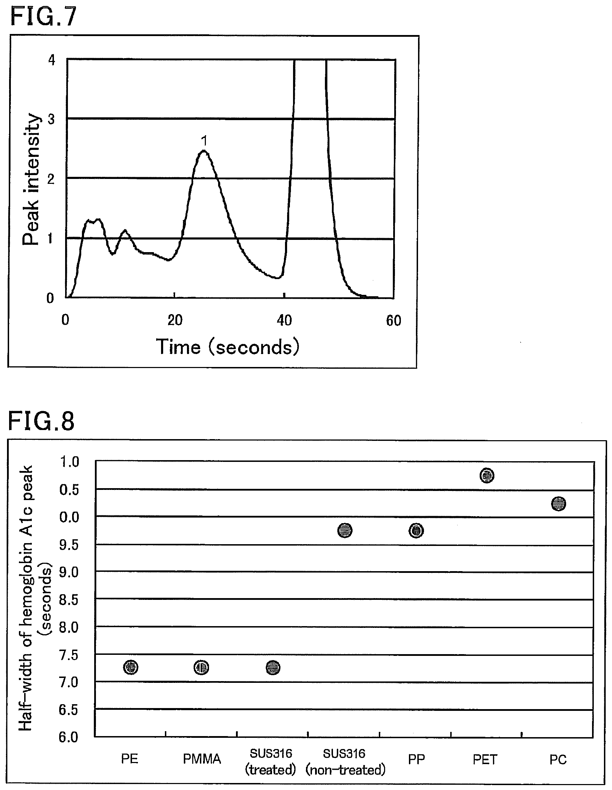

On the other hand, the use of the non-surface-treated stainless steel column (Fig. 4), the polypropylene (PP) column (Fig. 5), the polyethylene terephthalate (PET) column (Fig. 6), and the polycarbonate (PC) column (Fig. 7) resulted in poor separation patterns (for example, hemoglobin A1c peaks were broadened) , compared to the separation patterns shown in Figs. 1 to 3.

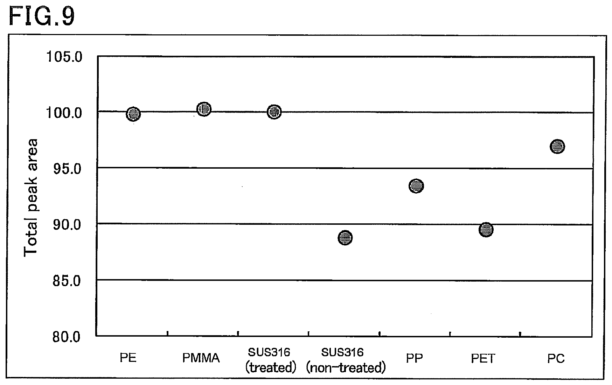

Fig. 8 shows a relationship between the columns of various materials in examples and comparative examples and half-widths of hemoglobin A1c peaks. In Fig. 8 and Fig. 9 (described later) , SUS316 (treated) was used as the stainless steel column coated with silicone resin, and SUS316 (non-treated) was used as the non-surface-treated stainless steel column.

Compared to the PE column, the PMMA column, and the stainless steel column coated with silicone resin, the columns other than those mentioned above clearly resulted in larger half widths and broader peaks.

Fig. 9 shows a relationship between the columns of various materials and total peak areas.

The values of the total peak area were plotted, assuming the total peak area obtained with the stainless steel column coated with silicone resin as 100.

The total peak areas obtained with the PE column and the PMMA column were substantially the same as that obtained with the stainless steel column coated with silicone resin. However, the total peak areas obtained with other columns were clearly low.

These results show that the PE column and the PMMA column are likely to suppress non-specific adsorption of hemoglobin and provide the same level of performance as that provided by conventionally known stainless steel columns coated with silicone resin.

### INDUSTRIAL APPLICABILITY

The present invention provides a column for liquid chromatography that can be produced at low cost and allows suppression of non-specific adsorption of components derived from living organisms. The present invention also provides a method for analyzing hemoglobin using the column for liquid chromatography.

### REFERENCE SIGNS LIST

- 1: Hemoglobin A1c

## Claims

1. A liquid chromatography column for analyzing hemoglobin, said column comprising a column pipe and an end fitting, said column being **characterized in that** the column pipe and the end fitting comprise polymethylmethacrylate.

2. A method for analyzing hemoglobin, comprising using the liquid chromatography column of claim 1.

## Patentansprüche

1. Flüssigchromatographiesäule zur Analyse von Hämoglobin, wobei die Säule ein Säulenrohr und ein Endfitting umfasst,
wobei die Säule **dadurch gekennzeichnet ist, dass** das Säulenrohr und das Endfitting Polymethylmethacrylat umfassen.

2. Verfahren zur Analyse von Hämoglobin, umfassend die Verwendung der Flüssigchromatographiesäule nach Anspruch 1.

## Revendications

1. Colonne de chromatographie en phase liquide pour analyser de l'hémoglobine, ladite colonne comprenant une conduite de colonne et un raccord d'extrémité, ladite colonne étant **caractérisée en ce que** la conduite de colonne et le raccord d'extrémité comprennent du poly(méthacrylate de méthyle).

2. Procédé pour analyser de l'hémoglobine, comprenant l'utilisation de la colonne de chromatographie en phase liquide de la revendication 1.
